Europäisches Patentamt

European Patent Office

Office européen des brevets

(11) Numéro de publication: **0 066 506**
**B1**

(12) **FASCICULE DE BREVET EUROPEEN**

(45) Date de publication du fascicule du brevet:
04.09.85

(21) Numéro de dépôt: **82400933.6**

(22) Date de dépôt: **19.05.82**

(51) Int. Cl.⁴: **C 03 B 37/08,** C 03 B 37/06

(54) Procédé et dispositif pour la fabrication de fibres de verre discontinues.

(30) Priorité: **19.05.81 FR 8109911**

(43) Date de publication de la demande:
**08.12.82 Bulletin 82/49**

(45) Mention de la délivrance du brevet:
**04.09.85 Bulletin 85/36**

(84) Etats contractants désignés:
**BE DE FR GB IT NL SE**

(56) Documents cités:
**EP - A - 0 029 779**
**FR - A - 1 313 434**
**FR - A - 2 470 099**
**US - A - 2 286 903**
**US - A - 3 574 581**

(73) Titulaire: **VETROTEX SAINT-GOBAIN, 767 quai des Allobroges, F-73000 Chambéry (FR)**

(72) Inventeur: **Lecron, Jacques, 77 rue des Comtes, F-73190 Challes les Eaux (FR)**
Inventeur: **Manera, Maxime, 12 route de Sécheron Jacob Bellecombette, F-73000 Chambery (FR)**
Inventeur: **Faure, Jean-Paul, Tormery Chignin, F-73800 Montmelian (FR)**
Inventeur: **Renaudin, Jean-Pierre, Begon Saint-Sulpice, F-73160 Cognin (FR)**

(74) Mandataire: **Breton, Jean-Claude et al, SAINT-GOBAIN RECHERCHE 39, quai Lucien Lefranc, F-93304 Aubervilliers (FR)**

## Description

La présente invention est relative à un procédé et à un dispositif pour la fabrication de fibres de matières thermoplastiques, telles que des verres minéraux. Elle concerne plus particulièrement la fabrication de longues fibres discontinues se présentant sous forme de mat ou de bourre ou assemblées sous forme de ruban.

La technique de fibrage la plus utilisée pour fabriquer ce genre de fibres consiste á soumettre à l'action d'un fluide une multiplicité de filets de matière vitreuse fondue. Ces filets de verre sont issus d'une multiplicité de petits tubes percés d'un seul orifice et disposés en saillie sur la face inférieure du fond d'une filière.

Ces tubes, appelés couramment tétons, assurent la séparation stable des filets de matière et évitent généralement le phénomène bien connu de «noyage», aussi appelé «enverrage», dans le cas particulier du verre, qui correspond à l'étalement de la matière fondue sur la face inférieure du fond de la filière.

Cette technique est notamment décrite dans le brevet US-A-2 286 903. L'installation comprend une filière en métal ou en alliage à haut point de fusion, chauffée par effet Joule qui présente une section transversale en forme de V. A la pointe du V est disposée longitudinalement une rangée de tétons par lesquels s'écoule le verre fondu. La filière entourée de réfractaire à l'exception de sa partie inférieure est enfermée dans une enceinte dans laquelle est amené un fluide gazeux sous pression. Ce fluide s'échappe par une fente ménagée à la partie inférieure de l'enceinte à l'aplomb de la pointe du V de la filière. Tout le fluide injecté dans l'enceinte passe ainsi à proximité du verre qui s'écoule des tétons et provoque son étirage par soufflage.

Des procédés et des dispositifs similaires sont également décrits dans les brevets américains suivants: US-A-2 206 058, 3 207 587, 3 607 164, 3 836 346.

Les installations connues permettant de soumettre à l'action d'un fluide une multiplicité de filets de verre présentent un certain nombre de caractéristiques communes qui sont les suivantes:

La filière utilisée, généralement en alliage de platine, posède un fond plat de forme rectangulaire très allongée, qui est muni de une à trois rangées longitudinales de tétons. Elle est alimentée par la matière vitreuse, à l'état fondu ou à l'état solide, par des moyens bien connus de l'homme de l'art.

Des moyens de soufflage sont disposés de part et d'autre des grands côtés du fond de la filière et injectent un fluide au niveau dudit fond (US-A-2 286 903) ou immédiatement au-dessous (autres brevets cités). Dans ce dernier cas, il s'agit de dispositifs comprenant de buses dirigées vers le bas et convergeant vers le plan vertical passant par l'axe longitudinal de ladite filière.

Sous l'action du flux gazeux sortant à grande vitesse de ces fentes ou buses, les filets de verre issus tétons sont étirés en longues fibres discontinues.

Ces dispositifs de l'art antérieur présentent deux inconvénients majeurs qui limitent la durée de vie de chaque filière et la quantité de fibres produites par elle.

En effet les t'tons qui canalisent le verre à la sortie de la filière occupent une place relativement importante sur le fond de ladite filière; or, pour que l'action des courants gazeux soit efficace, le fond présente une largeur et par concéquent une surface utile nécessairement réduites. De ces deux contraintes il résulte que le nombre de tétons par filière ne dépasse guère la centaine.

Par ailleurs les jets gazeux utilisés pour l'étirage provoquent un violent appel d'air le long des tétons et entre les tétons. Le frottement de l'air sur la paroi de ces derniers entraîne une usure rapide de celle-ci et abrègent considérablement la durée de vie de la filière.

Le brevet des U.S A-3 836 346 propose une solution pour remédier à l'un des inconvénients précités. Elle consiste à utiliser des tétons percés dissymétriquement de telle manière que la portion de leur paroi latérale dirigée vers l'extérieur soit plus épaisse que celle tournée vers le plan vertical passant par l'axe longitudinal de la filière. Cette structure, sans éliminer l'action érosive des violents courants d'air induits pendant le fibrage, permet d'en retarder les conséquences et d'augmenter la durée de vie des filières. Par rapport aux filières traditionnelles, cette solution ne premet pas, toutefois, d'augmenter le nombre de filaments obtenus par filière.

La demande de brevet EP-A-O 029 779, qui appartient à l'art antérieur au titre de l'article 54 alinéa 3 de la CBE, décrit un autre fond de filière. Ce fond est muni d'une mosaïque de bossages comportant chacun au moins une alvéole dont la base est percée de plusieurs orifices. Il s'agit toutefois d'une filière utilisée pour la fabrication de fibres continues obtenues par étirage mécanique.

La présente invention a pour objet un procédé et un dispositif susceptibles d'améliorer la fabrication de fibres discontinues.

Elle a plus précisément pour objet d'augmenter le nombre de filets de matière fondue susceptibles d'être étirés à partir d'une filière, et d'augmenter la durée de vie de cette dernière.

Ces buts sont atteints par l'emploi d'une nouvelle forme de filière dans une installation de fibrage telle que définie ci-après.

L'installation de fibrage comprend essentiellement une source de matière thermoplastique telle que du verre, une filière de forme allongée chauffée par effet Joule, des dispositifs d'étirage par soufflage placés parallèlement au plan vertical passant par l'axe longitudinal de la filière et de part et d'autre du fond de ladite filière, les ouvertures desdits dispositifs étant dirigées vers le bas, et des moyens de réception des fibres obtenues.

Le fond de la filière selon l'invention est formé d'une plaque sans tétous perforée d'une multiplicité d'orifices.

Selon un mode de réalisation de l'invention le fond de la filière est formé d'une plaque dont la face supérieure est creusée d'alvéoles eux-mêmes percés de plusieurs orifices, et dont la face inférieure est coupée de préférence de rainures définissant des bossages pourvus chacun d'un ou plusieurs alvéoles.

L'invention est exposée en détail ci-après en se référant aux figures jointes au présent mémoire et selon lesquelles:

– la figure 1 est une vue de côté d'une installation de fibrage comprenant une filière selon l'invention,

– la figure 2 est une coupe verticale partielle selon la ligne 2–2 de la figure 1,

– la figure 3 est un détail de la figure précédente,

– la figure 4 est une vue en plan détaillée d'une partie du fond de la filière,

– la figure 5 est une coupe verticale longitudinale du fond de la filière selon la ligne 5–5 de la figure 4,

– la figure 6 est une vue en plan détaillée d'une partie du fond d'une seconde filière selon l'invention,

– la figure 7 est une coupe verticale transversale d'une troisième filière selon l'invention,

– la figure 8 est une vue en perspective du fond de la filière représentée figure 7,

– la figure 9 est une coupe verticale transversale d'une quatrième filière selon l'invention.

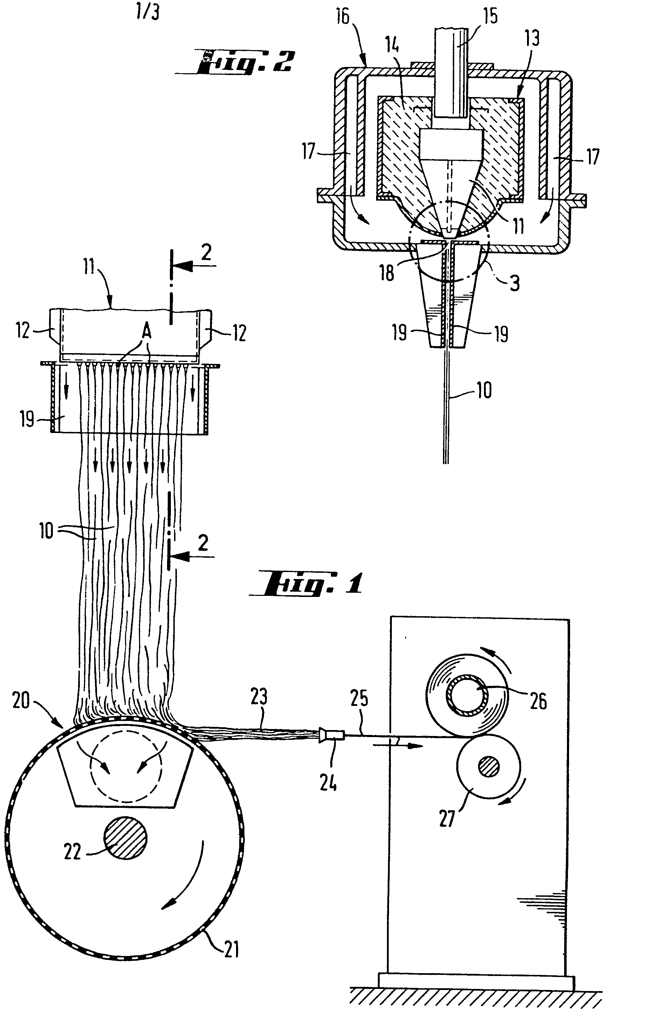

Ainsi que le montrent les figures 1 et 2, des filaments discontinus 10 sont produits par étirage de filets de matière fondue provenant d'une filière 11.

La filière 11, fabriquée généralement en alliage de platine lorsque la matière thermoplastique est du verre, est chauffée par effet Joule par l'intermédiaire des mors 12. Le fond de la filière 11 est muni d'alvéoles A creusés dans la face supérieure d'une plaque chaque, alvéole étant percé de plusieurs orifices.

La filière 11 est disposée dans un caisson 13 rempli de réfractaire 14. Elle est complètement entourée par ce réfractaire à l'exception du fond de ladite filière qui dépasse légèrement d'une ouverture pratiquée à la partie inférieure du caisson 13. La partie supérieure de la filière 11 est reliée par l'intermédiaire d'un conduit 15 à une source de matière thermoplastique, non représentée. Le caisson 13 est lui-même enfermé dans une chambre 16 comprenant au moins deux conduits d'amenée 17 d'un fluide sous pression.

Le fluide, dont la circulation est symbolisée par des flèches, s'échappe à la partie inférieure de la chambre 16 par une ouverture 18.

Cette ouverture 18, qui s'étend sur toute la longueur de fond de la filière 11, est délimitée par des parois 19 appelées plus couramment jupes. Ces jupes servent de moyens de guidage aux fibres discontinues 10 et permettent de renforcer et de maîtriser l'action du fluide d'étirage. Les fibres sont projetées sur la surface de la zone 20 d'un tambour perforé 21 tournant autour d'un axe 22 et y sont plaquées sous l'action localisée d'une aspiration d'air obtenue par des moyens connus de l'homme de l'art.

Le matelas de fibres 23 repris par des moyen de torsion 24 est transformé en une mèche 25, qui est enroulée sur un support rotatif 26 entraîné par friction par une broche motrice 27.

L'installation de fibrage qui vient d'être décrite n'est donnée qu'à titre d'exemple. Les filières selon l'invention peuvent être également utilisées avec des dispositifs de soufflage disposés de part et d'autre et au-dessous du plan passant par la sortie des orifices d'où sont issus les filets de verre.

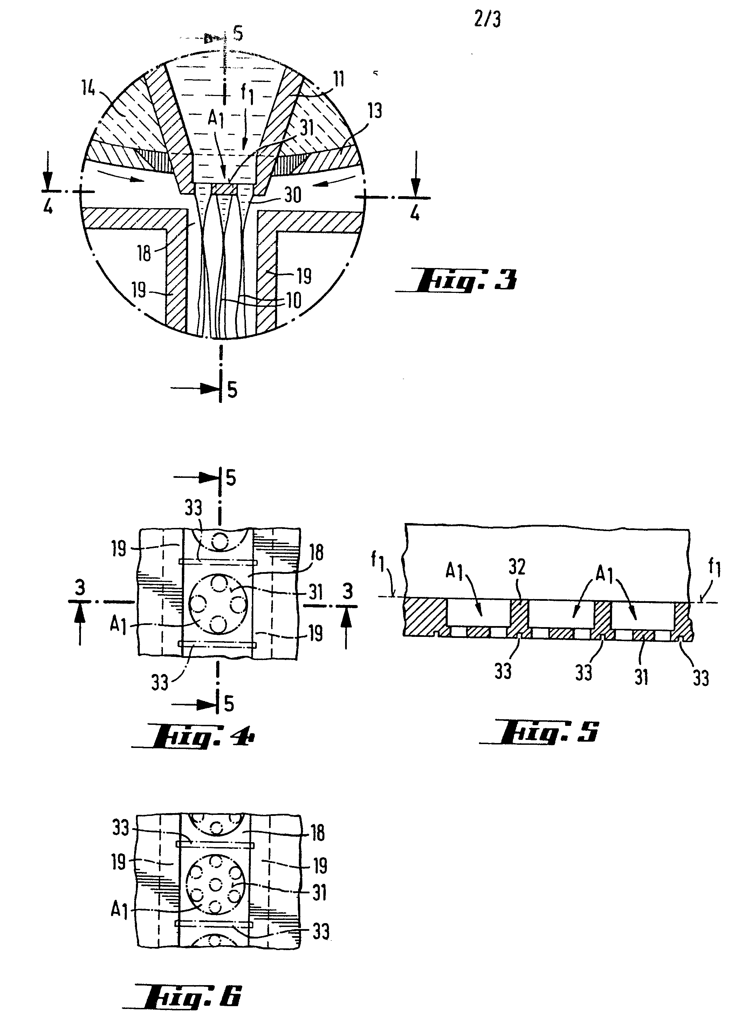

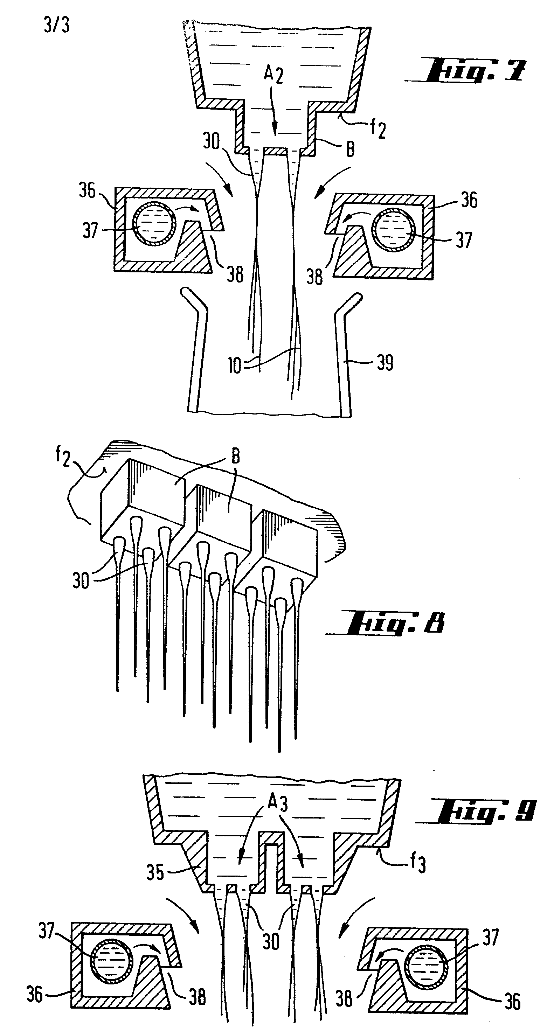

La structure des filières selon l'invention sera exposée de manière détaillée en se référant aux figures 3 à 9 illustrant un certain nombre d'exemples.

La figure 3, détail de la figure 2, représente la zone de fibrage. Dans cette zone, le bas de la filière 11 dépassant du caisson 13 est exposé à l'action du fluide sous pression, qui provoque l'écoulement de la matière fondue sous forme de filets 30 et leur amincissement en fibres discontinues 10. Ces filets 30 s'écoulent au travers de plusieurs orifices perforés dans la paroi fermant la partie inférieure de l'alvéole $A_1$.

Cet alvéole $A_1$ est formé d'une cavité cylindrique creusée dans la face supérieure délimitée par le plan $f_1$ d'une plaque plane. La base de cet alvéole est fermée par une paroi 31 perforée de quatre orifices. Les parois latérales, qui bordent les alvéoles parallèlement aux grands côtés de la filière, sont inclinées et dans le prolongement desdits côtés. Deux alvéoles adjacents sont séparés par une paroi 32.

La face inférieure de la plaque plane peut avantageusement porter des rainures transversales 33 qui définissent des bossages dont chacun est ici pourvu d'un seul alvéole.

Dans l'exemple illustré par les figures 3 à 5, la filière 11 est munie d'une seule rangée d'alvéoles indépendants les uns des autres et disposés longitudinalement.

Ces alvéoles peuvent comprendre un plus grand nombre d'orifices, ainsi que le montre la figure 6.

Sur un fond de filière plus large, il est possible d'implanter une double rangée d'alvéoles disposés en quinconce.

Les figures 7 à 9 illustrent d'autres exemples de filières selon l'invention.

Ces filières présentent des alvéoles creusés dans les faces supérieures délimitées par les plans $f_2$ et $f_3$ de parois formant le fond de ladite filière.

Si l'on se réfère aux figures 7 et 8, les alvéoles $A_2$ sont délimités par des bossages prismatiques B à section carrée. La paroi fermant la base desdits alvéoles est percée de quatre orifices par lesquels s'écoulent les filets de matière fondue 30.

La figure 9 représente une filière dont le fond est muni d'une double rangée d'alvéoles $A_3$. Ces alvéoles $A_3$ se distinguent notamment des alvéoles $A_2$ par leurs parois latérales, parallèles aux grands côtés de la filière. Ces parois 35 sont inclinées, ce qui facilite l'écoulement de l'air et réduit leur vitesse d'usure (desdites parois); comme sur la figure 3, elles peuvent se raccorder à la ligne de jonction de l'une des parois latérales de la filière et du fond.

Les figures 7 et 9 montrent aussi, schématiquement, que les filières appartiennent à une installation comprenant des dispositifs d'étirage par fluide disposés au-dessous du plan de fibrage. Ces dispositifs, référencés 36 comprennent chacun un conduit d'amenée du fluide sous pression 37 et une série de buses ou de fentes 38 dirigées vers le bas. Sous l'action conjointe du fluide et de l'air induit par celui-ci, les filets 30 de matière fondue sont étirés sous forme de fibres discontinues 10. Ces fibres sont canalisées par les parois d'une hotte 39, puis projetées et collectées sous forme d'un mat sur un tapis convoyeur non représenté.

Dans les différents exemples décrits précédemment les orifices percés dans la paroi fermant chaque alvéole forment un groupement d'orifices.

Au sein de chaque groupement d'orifices la distance bord à bord des orifices peut varier de 1 mm à 0,2 mm et même moins, mais elle est comprise de préférence entre 0,2 et 0,5 mm.

Les rainures qui séparent deux bossages adjacents ont une largeur au moins égale à 0,1 mm mais qui est préférence comprise entre 0,4 et 1 mm.

Le fonctionnement des filières selon l'invention est exposé ci-après:

La matière thermoplastique, par exemple du verre, est amenée sous forme solide ou à l'état fondu. La filière assurera selon le cas la fusion de verre et/ou son conditionnement en température.

Le verre fondu se subdivise en une multiplicité de courants qui alimenteront chacun un alvéole; le verre s'écoule par les différents orifices percés dans la paroi fermant la base de chaque alvéole et provoque l'enverrage partiel de la face externe de ladite paroi.

On met en fonctionnement les dispositifs de soufflage et on provoque ainsi, par étirage par fluide, la formation d'au moins un filet de verre par alvéole, de façon indépendante sur chaque alvéole, puis la subdivision dudit filet en autant de filaments qu'il existe d'orifices.

L'alliage constituant la filière est généralement un alliage de platine rhodié à 10% dont l'angle de contact avec le verre fondu à 1150 °C est inférieur à 40°.

Il est aussi possible d'utiliser des alliages dont l'angle de contact soit supérieur à 60°, pour réaliser les parois cernant les alvéoles et plus particulièrement pour la paroi fermant chaque alvéole; ceci a pour effet de réduire l'enverrage de la face inférieure externe de cette paroi. On peut ainsi utiliser un alliage ternaire commercialisé sous le nom de PR 3/4 par la Société COMPTOIR-LYON-ALEMAND-LOUYOT. Cet alliage, qui comprend 93% de platine, 3% d'iridium et 4% d'or fait un angle de 75° avec le verre E porté à 1150 °C.

Il est également possible d'obtenir le même effet en recouvrant la face inférieure externe de la paroi fermant chaque alvéole par une matière très peu mouillée par le verre fondu, telle que le nitrure de bore.

**Revendications**

1. Dispositif pour fabriquer des fibres discontinues à partir d'une matière thermoplastique fondue, telle que du verre, comprenant une source d'alimentation en verre, une filière chauffée par effet Joule dont le fond, de forme rectangulaire allongée, délivre une multiplicité de filets de matière fondue, des dispositifs d'étirage par souflage, disposés parallèlement au plan vertical passant par l'axe longitudinal de la filière de part et d'autre du fond de celle-ci, et injectant un fluide vers le bas au niveau dudit fond ou immédiatement audessous de celui-ci, des moyens de réception desdites fibres, caractérisé en ce que le fond de la filière est formé d'une plaque sans tétons perforée d'une multiplicité d'orifices.

2. Dispositif selon la revendication 1, caractérisé en ce que le fond de la filière est formé d'une plaque dont la face supérieure est creusée d'alvéoles eux-mêmes percés de plusieurs orifices.

3. Dispositif selon l'une des revendications 1 et 2, caractérisé en ce que les alvéoles sont de forme cylindrique et sont répartis en quinconce.

4. Dispositif selon l'une des revendications 1 à 3, caractérisé en ce que le fond de la filière est formé d'une plaque dont la face inférieure est coupée de rainures définissant des bossages pourvus chacun de plusieurs alvéoles.

5. Dispositif selon l'une des revendications 1 à 3, caractérisé en ce que le fond de la filière est formé d'une plaque dont la face inférieure est coupée de rainures définissant des bossages pourvus chacun d'un seul alvéole interne.

6. Dispositif selon la revendication 5, caractérisé en ce qu'en coupe dans un plan horizontal la forme extérieure des bossages est différente de la forme de l'alvéole interne correspondante.

7. Disposition selon l'une des revendications 5 et 6, caractérisé en ce que la face inférieure externe de chaque bossage est carrée.

8. Dispositif selon l'une des revendications 5 et 6, caractérisé en ce que la face inférieure externe de chaque bossage est circulaire.

9. Dispositif selon l'une des revendications 4 à 8, caractérisé en ce que la paroi latérale des bossages est verticale.

10. Dispositif selon l'une des revendications 4 à 8, caractérisé en ce que l'épaisseur de la paroi des possages décroît régulièrement de leur point de raccordement au fond de la filière à leur face inférieure.

11. Dispositif selon la refendication 10, caractérisé en ce qu'au moins une des parois latérales des bossages se raccorde directement à l'une des lignes de jonction entre le fond de la filière et les parois latérales de ladite filière.

12. Dispositif selon l'une des revendications précédentes, caractérisé en ce que la paroi perforée fermant la base des alvéoles est constituée d'un alliage métallique dont l'angle de contact avec le verre fondu à 1150 °C est supérieur à 60°.

13. Dispositif selon l'une des revendications 1 à 11, caractérisé en ce que la face inférieure externe de la paroi perforée fermant la base des alvéoles est revêtue d'une substance dont l'angle de contact avec le verre fondu à 1150 °C est supérieur à 60°.

14. Procédé de fabrication par étirage par fluide à partir d'une matière minérale thermoplastique, telle que de verre alimentant une filière, de fibres discontinues formées à partir d'une pluralité de filets de matière fondue s'écoulant du fond de cette filière métallique, caractérisé en ce que:

— on subdivise le verre fondu en une multiplicité de courants alimentant chacun un alvéole creusé dans la face supérieure d'une plaque formant le fond del la filière, chaque alvéole étant fermé à sa partie inférieure par une paroi perforée de plusieurs orifices débouchant sur la face inférieure externe de ladite plaque

— on provoque l'enverrage partiel de la face inférieure externe de ladite plaque en laissant chaque courant de verre s'écouler à travers lesdits orifices,

— on provoque par étirage dû à la circulation d'un fluide dirigée de haut en bas la formation d'au moins un filet de verre par alvéole de façon indépendante sur chaque alvéole puis la subdivision dudit filet en autant de filaments qu'il existe d'orifices par alvéole.

## Patentansprüche

1. Vorrichtung zur Herstellung von Stapelfasern aus einem schmelzflüssigen thermoplastischen Material, wie Glas, mit einer Quelle zur Zuführung von Glas, einer durch Joule-Effekt erwärmten ziehdüseneinheit, über deren langgestreckten, rechteckförmigen Boden eine Vielzahl von Fäden aus schmelzflüssigem Material abgegeben wird, mit blasend arbeitenden Auszieheinrichtungen, die parallel zu einer vertikalen Ebene durch die Längsachse der Ziehdüseneinheit beiderseits des Bodens der Ziehdüseneinheit angeordnet sind und ein Fluid von oben auf das Niveau des Bodens oder unmittelbar unterhalb des Bodens blasen, sowie mit einer Aufnahmeeinrichtung für die Fasern, dadurch gekennzeichnet, dass der Boden der Ziehdüseneinheit durch eine von Vorsprüngen freie Platte gebildet ist, die mit einer Vielzahl von Öffnungen perforiert ist.

2. Vorrichtung nach Anspruch 1, dadurch gekennzeichnet, dass der Boden der Ziehdüseneinheit aus einer Platte gebildet ist, deren oben liegende Seite von Zellen vertieft ist, die selbst mit mehreren Öffnungen versehen sind.

3. Vorrichtung nach Anspruch 1 oder 2, dadurch gekennzeichnet, dass die Zellen zylindrisch ausgebildet und versetzt zueinander angeordnet sind.

4. Vorrichtung nach einem der Ansprüche 1 bis 3, dadurch gekennzeichnet, dass der Boden der Ziehdüseneinheit aus einer Platte gebildet ist, deren untere Seite Nuten aufweist, welche Wulste begrenzen, von denen jeder mit mehreren Zellen versehen ist.

5. Vorrichtung nach einem der Ansprüche 1 bis 3, dadurch gekennzeichnet, dass der Boden der Ziehdüseneinheit aus einer Platte gebildet ist, deren untere Fläche Nuten aufweist, welche Wülste begrenzen, von denen jeder mit einer einzelnen Innenzelle versehen ist.

6. Vorrichtung nach Anspruch 5, dadurch gekennzeichnet, dass bei einem Schnitt in einer horizontalen Ebene die Aussenform der Wülste unterschiedlich von der Form der entsprechenden Innenzelle ist.

7. Vorrichtung nach Anspruch 5 oder 6, dadurch gekennzeichnet, dass die untere Aussenfläche eines jeden Wulstes quadratisch ist.

8. Vorrichtung nach Anspruch 5 oder 6, dadurch gekennzeichnet, dass die untere Aussenfläche eines jeden Wulstes kreisförmig ist.

9. Vorrichtung nach einem der Ansprüche 4 bis 8, dadurch gekennzeichnet, dass die Seitenwand der Wulste vertikal ist.

10. Vorrichtung nach einem der Ansprüche 4 bis 8, dadurch gekennzeichnet, dass die Dicke der Wand der Wülste regelmässig von dem Verbindungspunkt mit dem Boden der Ziehdüseneinheit zu ihrer unteren Fläche zunimmt.

11. Vorrichtung nach Anspruch 10, dadurch gekennzeichnet, dass mindestens eine der Seitenwände der Wülste sich unmittelbar mit einer der Verbindungslinien zwischen dem Boden der Ziehdüseneinheit und den Seitenwänden der Ziehdüseneinheit vereinigt.

12. Vorrichtung nach einem der vorhergehenden Ansprüche, dadurch gekennzeichnet, dass die perforierte Wand, welche den Boden der Zellen abschliesst, aus einer Metallegierung gebildet ist, deren Kontaktwinkel mit dem schmelzflüssigen Glas bei einer Temperatur von 1150 °C > als 60° ist.

13 Vorrichtung nach einem der Ansprüche 1 bis 11, dadurch gekennzeichnet, dass die untere Aussenfläche der perforierten Wand, welche den Boden der Zellen abschliesst, mit einer Substanz beschichtet ist, deren Kontaktwinkel mit dem schmelzflüssigen Glas bei 1150 °C > als 60° ist.

14. Verfahren zur Herstellung von diskontinuierlichen Fasern aus einer Anzahl von Fäden aus schmelzflüssigem Material, welche aus dem Boden einer metallischen Ziehdüseneinheit strömen, durch Ausziehen mittels eines Fluids aus einem thermoplastischen mineralischen Material, wie einer Ziehdüseneinheit zugeführtes Glas, dadurch gekennzeichnet, dass man das schmelzflüssige Glas in eine Vielzahl von Strömen unterteilt, in jeder einer hohlen Zelle in der oben liegenden Seite einer den Boden der Ziehdüseneinheit bildenden Platte zugeführt werden, wobei jede Zelle an ihrem unteren Abschnitt durch eine Wand abgeschlossen ist, welche mit mehreren Öffnungen perforiert ist, welche auf der unteren Aussenseite der Platte münden, dass man eine teilweise Verglasung der unteren Aussenfläche der Platte herbeiführt, indem man jeden Glasstrom quer durch die Öffnungen strömen lässt, und dass man durch Ausziehen aufgrund Zirkulation eines von oben nach unten gerichteten Fluids die Bildung von mindestens einem Glasfaden pro Zelle unabhängig für jede Zelle bewirkt und dann die Unterteilung des Fadens in eine der Anzahl der Öffnungen pro Zelle entsprechende Zahl von Filamenten bewirkt.

## Claims

1. Device for manufacturing discontinuous fibres from a molten thermoplastics material such as glass, comprising a source from which glass is fed, a die heated by Joule's effect and of which the bottom, of elongated rectangular shape, delivers a multiplicity of threads of molten substance, means of drawing by a blowing process disposed parallel with the vertical plane passing through the longitudinal axis of the die on either side of the bottom of this latter and injecting a fluid downwardly at the level of the said bottom or immediately below this latter, means of receiving the said fibres, characterised in that the bottom of the die is constituted by a plate without nipples and in which a multiplicity of orifices are provided.

2. Device according to Claim 1, characterised in that the bottom of the die is constituted by a plate of which the upper face has cut into it a number of cells in which a plurality of orifices are pierced.

3. Device according to one of Claims 1 and 2, characterised in that the cells are cylindrical in shape and are distributed in a staggered arrangement.

4. Device according to one of Claims 1 to 3, characterised in that the bottom of the die is constituted by a plate of which the underside is provided with grooves defining bosses each of which is provided with a plurality of cells.

5. Device according to one of Claims 1 to 3, characterised in that the bottom of the die is constituted by a plate, the underside of which is provided with grooves defining bosses each of which is provided with a single inner cell.

6. Device according to Claim 5, characterised in that in section in a horizontal plane the external form of the bosses differs from the form of the corresponding inner cell.

7. Device according to one of Claims 5 and 6, characterised in that the outer underside of each boss is square.

8. Device according to one of Claims 5 and 6, characterised in that the outer underside of each boss is circular.

9. Device according to one of Claims 4 to 8, characterised in that the lateral wall of the bosses is vertical.

10. Device according to one of Claims 4 to 8, characterised in that the thickness of the wall of the bosses cedreases regularly from their point of connection with the bottom of the die to their underside.

11. Device according to Claim 10, characterised in that at least one of the lateral wall of the bosses is connected directly to one of the junction lines between the bottom of the die and the lateral walls of the said die.

12. Device according to one of the preceding Claims, characterised in that the perforated wall closing off the base of the cells is constituted by a metal alloy of which the angle of contact with the molten glass at 1150° is greater than 60°.

13. Device according to one of Claims 1 to 11, characterised in that the outer underside of the perforated wall closing off the base of the cells is covered with a substance of which the angle of contact with the molten glass at 1150 °C is greater than 60°.

14. Method of manufacture by drawing by fluid from a thermoplastics mineral material such as glass which is fed to a die, discontinuous fibres formed by a plurality of threads of molten substance flowing from the bottom of the said metal die, characterised in that:

– the molten glass is sub-divided into a multiplicity of flows, each supplying a cell hollowed out in the upper face of a plate forming the bottom of the die, each cell being closed at the bottom by a wall in which are provided a plurality of orifices discharging onto the outer underside of the said plate

– partial glazing of the outer underside of the said plate is caused, each flow of glass being allowed to flow through the said orifices,

– by drawing due to the circulation of a fluid directed downwardly, formation of at least one thread of glass is caused independently per cell, the said thread then being sub-divided into as many filaments as there are orifices per cell.

**Fig. 2**

**Fig. 1**

*Fig. 3*

*Fig. 4*

*Fig. 5*

*Fig. 6*

3/3

**Fig. 7**

**Fig. 8**

**Fig. 9**

11